# EUROPEAN PATENT SPECIFICATION

(11) **EP 3 606 162 B1**
(45) Date of publication and mention of the grant of the patent: **12.10.2022**
(21) Application number: 18770977.9
(22) Date of filing: 28.02.2018
(51) Int. Cl.: H04W 28/24, H04W 28/18, H04W 76/15

(54) **METHOD AND DEVICE OF QUALITY OF SERVICE PROCESSING**
VERFAHREN UND VORRICHTUNG DER DIENSTQUALITÄTVERARBEITUNG
PROCÉDÉ ET DISPOSITIF DE TRAITEMENT DE QUALITE DU SERVICE

(30) Priority: 24.03.2017 CN 201710186478
(43) Date of publication of application: 05.02.2020
(73) Proprietor: Datang Mobile Communications Equipment Co., Ltd., Beijing 100085 (CN)
(72) Inventor: WANG, Ying, Beijing 100191 (CN); LIU, Jiamin, Beijing 100191 (CN); LIU, Aijuan, Beijing 100191 (CN)
(74) Representative: Studio Torta S.p.A.
(86) International application number: PCT/CN2018/077532
(87) International publication number: WO 2018/171398

(56) References cited:
- CN-A- 102 149 147
- CN-A- 104 105 171
- CN-A- 106 304 403
- US-A1- 2011 267 943
- US-A1- 2016 338 130
- US-A1- 2017 055 313
- "3rd Generation Partnership Project; Technical Specification Group Radio Access Network; Evolved Universal Terrestrial Radio Access Network (E-UTRAN); Extension of Dual Connectivity in EUTRAN (Release 13)", 3GPP DRAFT; TR36.875 V1.2.0_REVMARK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 June 2015 (2015-06-05), XP050983871, Retrieved from the Internet: URL:http://www.3gpp.org/ftp/tsg_ran/WG3_Iu /TSGR3_88/Docs/ [retrieved on 2015-06-05]
- NOKIA et al.: "QoS flow relocation", 3GPP, 28 February 2017 (2017-02-28), XP051244636,

## Description

### TECHNICAL FIELD

The present disclosure relates to the field of communication technology, in particular to a method and a device of quality of service (QoS) processing.

### BACKGROUND

In conventional Long Term Evolution (LTE) system, if current air interface resources can't satisfy QoS requirements, the Evolved Radio Access Bearer (E-RAB) will be released proactively and Core Network will be notified. In New Radio (NR) system, for Guaranteed Bit Rate (GBR) service, the notification control in the QoS parameters indicates whether the Core Network may be notified if the QoS of a certain flow can't be satisfy by the Radio Access Network (RAN) side. It means that in 5G system, for the GBR service, the radio access side is permitted to inform the Core Network that the current radio network condition can't satisfy the QoS requirements of the GBR service. In a multi connectivity scenario, QoS flow may be split to a Secondary Node (secondary base station), thus what to do in the case that the QoS can't be satisfied by the Secondary Node needs to be taken into consideration. In a Central Unit (CU) - Distributed Unit (DU) split scenario, what to do in the case that the QoS can't be satisfied by the DU needs to be taken into consideration.

In conventional LTE system, if current air interface resources can't satisfy the QoS requirements, the E-RAB will be released proactively and the Core Network will be notified, thereby impacting service performance. At present, there is no mechanism for managing the GRB flow for multi connectivity scenario and CU-DU scenario at the RAN side.

Patent document US2017/0055313A1 provides a method by a wireless local area network termination node, which includes: receiving from a base station a first message including bearer related information; identifying access category information based on quality of service class identifier information included in the bearer related information; transmitting to the base station a second message in response to the first message; and transmitting data to a terminal based on the access category information. However, the above-mentioned issues are not solved.

### SUMMARY

The present invention relates to a method of QoS processing, a first device and a computer readable storage medium, as defined in the annexed claims.

According to the present invention, in the case that a first device can't satisfy a QoS requirement in a multi connectivity scenario or a CU-DU scenario in a 5G system, the first device may act accordingly to satisfy the QoS requirement.

A technical solution of the claims has advantages or beneficial effects as follows: when the first device does not satisfy the QoS requirement in the multi connectivity scenario or the CU-DU scenario in the 5G system, the first device can act accordingly to satisfy the QoS requirement, so as to solve the problem in the related technologies that E-RAB will be released proactively if current air interface resources can't satisfy a QoS requirement.

### BRIEF DESCRIPTION OF THE DRAWINGS

Fig. 1 is a schematic structural diagram of a bearer model in LTE system according to related technologies;
Fig. 2 is a schematic diagram of a NR architecture according to related technologies;
Fig. 3 is a schematic diagram of an architecture of a 5G communication system;
Fig. 4 is a schematic diagram of a 5G network architecture;
Fig. 5 is a schematic diagram of dual connectivity;
Fig. 6 is another schematic diagram of dual connectivity;
Fig. 7 is a flow diagram of a method of QoS processing according to an embodiment;
Fig. 8 is a flow diagram of a method of QoS processing according to an embodiment not covered by the claimed invention;
Fig. 9 is a flow diagram of a process in which a Secondary Node reports QFI of flow and/or recommended QoS parameter in multi connectivity SCG bearer or SCG split bearer scenario according to an embodiment not covered by the claimed invention;
Fig. 10 is a flow diagram of a process in which a Secondary Node reports RB ID and/or recommended QoS parameter in CU-DU scenario according to an embodiment not covered by the claimed invention;
Fig. 11 is a structural diagram of a first device according to an embodiment;
Fig. 12 is a structural diagram of a second device according to an embodiment not covered by the claimed invention;
Fig. 13 is a structural diagram of a first device according to another embodiment not covered by the claimed invention; and
Fig. 14 is a structural diagram of a second device according to another embodiment not covered by the claimed invention.

### DETAILED DESCRIPTION

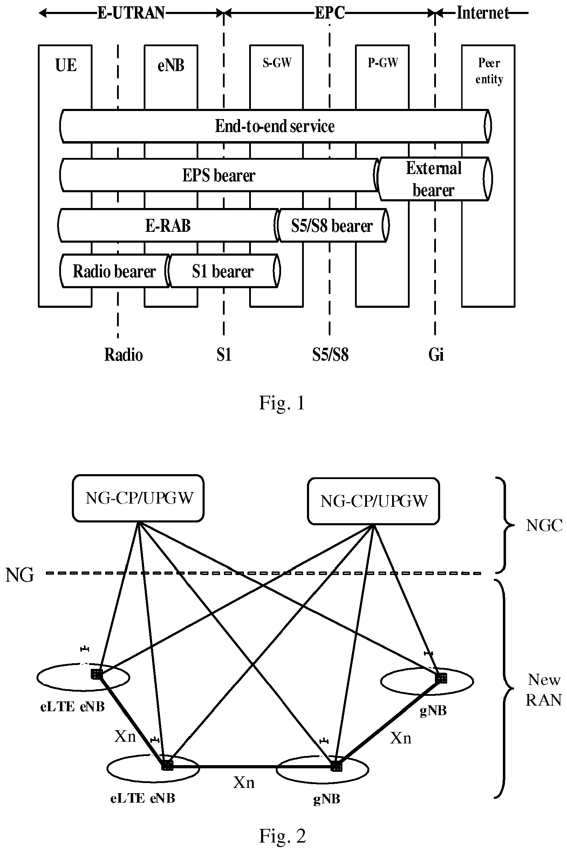

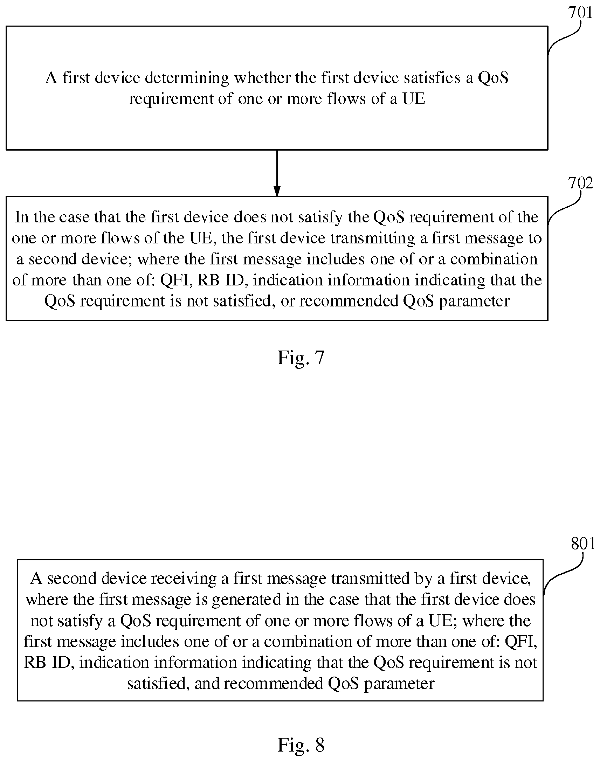

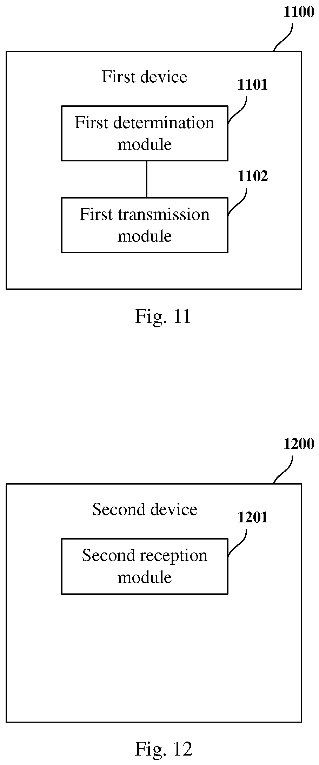

Exemplary embodiments of the present disclosure are detailed in conjunction with drawings. It should be noted, the present disclosure may be implemented in various ways although the exemplary embodiments are illustrated in the drawings. The embodiments provided herein are not to limit the present disclosure, and on the contrary, they are provided for thoroughly understanding the present disclosure and completely conveying the scope of the present disclosure to those skilled in the art. In the following, the embodiments referring to Figs. 7 and 11 are according to the claimed invention, whereas the embodiments referring to Figs. 8-10 and 12-14 are not according to the invention and are present for illustration purpose only.
(1) Bearer model in conventional LTE system Referring to Fig. 1, in conventional LTE system, core network is responsible for generation of QoS parameter of E-RAB, and since there is a one-to-one mapping relation between air interface Radio Bearer (RB) and the E-RAB, the E-RAB QoS parameter generated by the core network are directly used as QoS parameter of the air interface RB.
(2) RAN side architecture Embodiments of the present disclosure may be applied in various network deployment structures. For convenience, two types of network deployment structures which may be employed in the future mobile communication are introduced.

The first deployment structure: base station + user equipment.

Referring to Fig. 2, a typical New Radio (NR) architecture is illustrated. A gNB (base station) has multiple cells and the UE transmits/receives air interface data to/from the cell in a connected state.

The second deployment structure: network side node includes Central Unit (CU) and Distributed Unit (DU), and user side node includes UE.

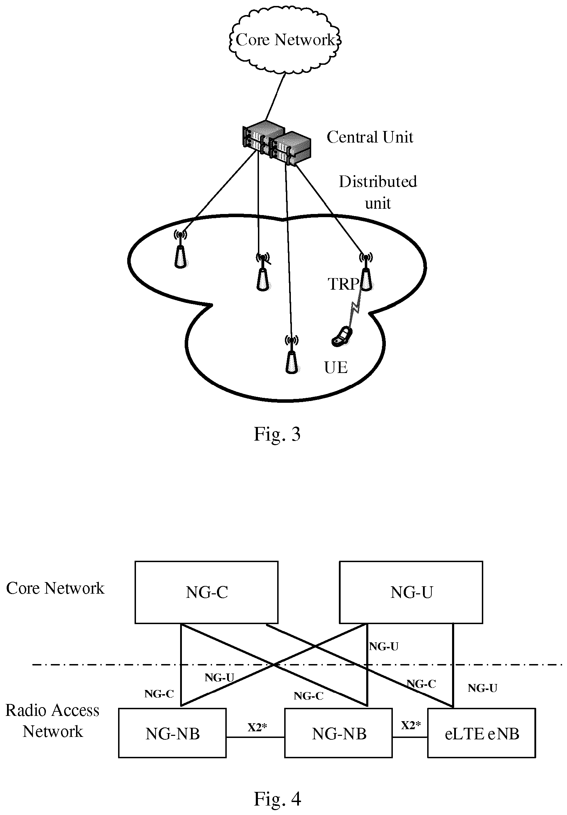

Referring to Fig. 3, an architecture which may be employed in the future 5G mobile communication is illustrated. The network side node includes CU and DU, where one CU controls multiple DUs deployed in a certain area, and these DUs perform air interface transmission with the UE via Transmission Reception Point (TRP). One or more TRPs may serve a UE to perform data transmission at the same time. Embodiments of the present disclosure are applicable to the two RAN architectures described above.

5G network architecture is illustrated in Fig. 4, where the network architecture includes three logical entities: NG-C (control plane function entity of core network) and NG-U (user plane function entity of core network) located in core network, and gNB (next generation base station) and eLTE eNB (base station of evolved LTE) located in access network. A NG-C interface is established between the NG-C and the gNB to transmit control plane signaling; and a NG-U is established between the NG-U and the gNB to transmit user plane data. An Xn interface, supporting both control plane function (e.g., Xn-C) and user plane function (e.g., Xn-U), is established between gNBs of radio access network.

A control plane connection at the granularity of UE may be established on the NG-C (where the control plane connection corresponding to each UE may be identified with a NG-AP ID), and a user plane connection (or referred to as user plane tunnel) at the granularity of PDU session may be established on the NG-U. A UE can only maintain one NG-C connection to the NG-C at a time; however, the UE may establish multiple user plane connections (or user plane tunnels) at the granularity of PDU session to NG-U on the NG-U interfaces. In radio access network, there may be one or more gNBs serving the UE at the same time.

### (3) Dual Connectivity mechanism

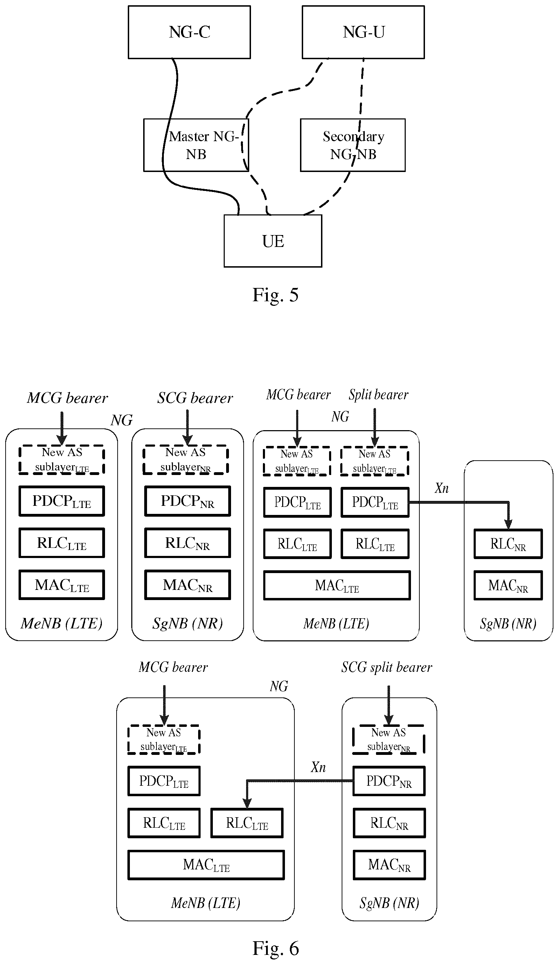

Currently, dual connectivity mechanism is supported in LTE system. The dual connectivity mechanism is to reduce the load of the Master RAN. In the mechanism, a UE accesses the Master RAN, control plane message is exchanged between the Master RAN and the UE, and the Master RAN may opt to migrate a part of or all of bearers to a Secondary RAN to transmit to the UE, as shown in Fig. 5.

As illustrated in Fig. 6, in the dual connectivity scenario, there are bear types including MCG bearer (Master Cell Group bearer), SCG bearer (Secondary Cell Group bearer), Split bearer and SCG split bearer.

### (4) QoS flow

The future 5G core network forgoes the concept of bearer, and QoS parameter issued by the NG-C of the core network to the gNB are configured at the granularity of flow. On the other hand, since the gNB of the access network still performs QoS management at the granularity of RB, it is needed for the access network to generate QoS parameter at RB level for interaction process between gNB and UE and interaction process between gNB and other radio access entity.

Referring to Fig. 7, a method of QoS processing according to an embodiment is illustrated, the method including the following steps.

Step 701, a first device determining whether the first device satisfies a QoS requirement of one or more flows of a UE.

In the embodiment, the determination may be performed through two modes as follows: (1) the first device determining whether the first device satisfies the QoS requirement of the one or more flows of the UE in accordance with QoS parameter(s) of the one or more flows; (2) the first device determining whether the first device satisfies the QoS requirement of the one or more flows of the UE in accordance with the QoS parameter(s) of the one or more flows and a mapping relation between data radio bearer (DRB) and flow.

Step 702, in the case that the first device can't satisfy the QoS requirement of the one or more flows of the UE, the first device transmitting a first message to a second device; where the first message includes one of or a combination of more than one of: QoS flow identifier (QFI), radio bearer (RB) ID, indication information indicating that the QoS requirement can't be satisfied, or recommended QoS parameter.

The method of QoS processing according to the embodiment may be applicable to a multi connectivity scenario, e.g., a multi connectivity SCG bearer or multi connectivity SCG split bearer scenario; or, the method of QoS processing according to the embodiment may be applicable to a CU-DU scenario. In the multi connectivity SCG bearer or multi connectivity SCG split bearer scenario, the first device is a secondary base station, and the second device is primary base station; and in the CU-DU scenario, the first device is the DU and the second device is the CU.

In the multi connectivity scenario, prior to establishing the multi connectivity for the UE, the method further includes: the first device receiving the QoS parameter(s) of the one or more flows transmitted by the second device and the mapping relation between DRB and flow on the second device.

In the embodiment, the QoS parameter includes a suggested guaranteed bit rate and/or a suggested maximum bit rate.

Based on the embodiments of the present disclosure, in the multi connectivity scenario or the CU-DU scenario, the first device can transmit the first message to the second device when the first device can't satisfy the QoS requirement, where the first message includes one of or a combination of more than one of: QFI, RB ID, indication information indicating that the QoS requirement can't be satisfied, or recommended QoS parameter. In this way, when the first device can't satisfy the QoS requirement in the multi connectivity scenario or the CU-DU scenario in the 5G system, the first device may act accordingly to satisfy the QoS requirement.

Referring to Fig. 8, a process of a method of QoS processing is illustrated, the method including the following specific steps.

Step 801, a second device receiving a first message transmitted by a first device, where the first message is generated in the case that the first device can't satisfy a QoS requirement of one or more flows of a UE; where the first message includes one of or a combination of more than one of: QoS Flow Identifier (QFI), Radio Bearer (RB) ID, indication information indicating that the QoS requirement can't be satisfied, or recommended QoS parameter.

The method of QoS processing according to the embodiment may be applicable to a multi connectivity scenario, e.g., a multi connectivity SCG bearer or multi connectivity SCG split bearer scenario; or, the method of QoS processing according to the embodiment may be applicable to a CU-DU scenario. In the multi connectivity SCG bearer or multi connectivity SCG split bearer scenario, the first device is a secondary base station, and the second device is a primary base station; and in the CU-DU scenario, the first device is a DU and the second device is a CU.

Optionally, in the multi connectivity scenario, the method further includes: the second device determining whether a bearer type change is needed in accordance with the first message.

Optionally, in the CU-DU scenario, the method further includes: the second device transmitting a second message to a core network in accordance with the first message. Further, the second message includes one of or a combination of more than one of: the QFI, the indication information indicating that the QoS requirement can't not be satisfied, or a suggested QoS parameter.

In the embodiment, the QoS parameter includes a suggested guaranteed bit rate and/or a suggested maximum bit rate.

Based on the embodiments of the present disclosure, in the multi connectivity scenario or the CU-DU scenario, the first device can transmit the first message to the device when the first device can't satisfy the QoS requirement, where the first message includes one of or a combination of more than one of: QFI, RB ID, indication information indicating that the QoS requirement is not satisfied, or recommended QoS parameter. In this way, when the first device can't satisfy the QoS requirement in the multi connectivity scenario or the CU-DU scenario in the 5G system, the first device may act accordingly to satisfy the QoS requirement.

Hereinafter, the process of the method of QoS processing is explained with reference to the dual connectivity scenario and the CU-DU scenario.
(1) if core network sets notification control for one or more QoS flows: in the dual connectivity scenario, during the process of adding the Secondary Node (secondary base station), the Master Node (primary base station) may transmit QoS parameter of flow on which split is performed, DRB-flow mapping relation and QoS parameter of RB to the Secondary Node. After the process is completed, if resources of the Secondary Node can't satisfy the QoS requirement, one or more of related QFI, RB ID or recommended QoS parameter need to be reported to the Master Node. The Master Node determines, based on its policy, whether to perform a bearer type change or to notify the core network and report the related QFI and/or recommended QoS parameter to the core network.
(2) if core network sets notification control for one or more QoS flows: in the CU-DU scenario, during the process of the CU selecting the DU for the UE, the establishment request message may include QoS parameter of flow and DRB-flow mapping relation, in addition to QoS parameter of RB. After the process is completed, if resources of the DU can't satisfy the QoS requirement, related RB ID and recommended QoS parameter need to be reported to the CU, and the CU reports related QFI and/or recommended QoS parameter to the core network.

Optionally, the QoS parameter includes a guaranteed bit rate (GBR) and/or a maximum bit rate (MBR).

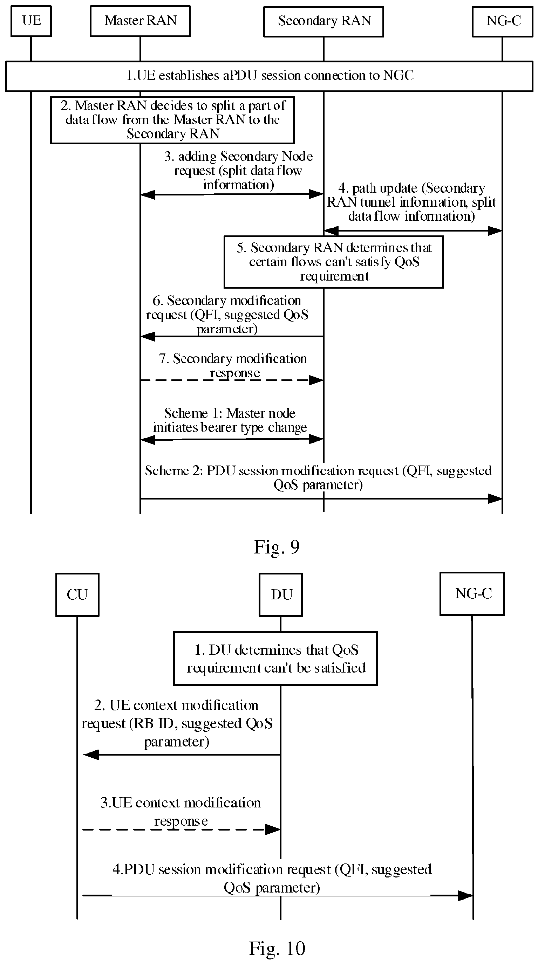

The first embodiment: in the multi connectivity SCG bearer/SCG split bearer scenario, the Secondary Node reports QFI of flow and/or recommended QoS parameter, as shown in Fig. 9.

Step 1, the UE establishes a user plane connection to the NGU via the Master RAN. Step 2, the Master RAN selects the Secondary RAN, and determines to split a part of data flow of the PDU session to the Secondary RAN.

Step 3, the Master RAN adds the Secondary RAN through the Xn interface, where the request message carries QoS parameter of flow (including per flow notification control).

Step 4, the Master RAN updates path information, and creates a tunnel from the Secondary RAN to the NGU.

Step 5, after the dual connectivity is established for the UE, if the Secondary Node determines that requirement of QoS flow can't be satisfied, the Secondary Node transmits a Secondary Node modification request message carrying the QFI and/or suggested QoS parameter to the Master RAN.

Step 6, the Master Node replies with a response message.

It is noted that, step 6 is optional.

The subsequent operations of the Master Node are as follows.

Scheme 1: the Master Node determines whether to perform a bearer type change, e.g., change into a MCG bearer, in accordance with the QoS information transmitted by the Secondary Node, and the MeNB (macro eNB) may initiate an Xn Secondary Node modification or release process to complete the bearer type change. For a SCG split bearer, the Master Node may re-negotiate RB QoS with the Secondary Node, and the Master Node may initiate a Secondary Node modification process to complete the negotiation of the RB parameters.

Scheme 2: the Master Node may directly initiate a PDU Session modification request, carrying the QFI and/or QoS information reported by the Secondary Node, to the core network in accordance with the QoS information transmitted by the Secondary Node. It is noted, the Scheme 1 and Scheme 2 may be used in conjunction. For example, after the Scheme 1 is performed, the MeNB may determine whether the flow QoS requirement may be satisfied in accordance with the resource usage of the MeNB; if the flow QoS requirement can't be satisfied, the MeNB initiates a PDU Session modification request carrying the flow QFI and/or suggested QoS information.

The second embodiment: in the multi connectivity split bearer scenario, the Secondary Node reports the RB ID and/or recommended QoS parameter.

The second embodiment is similar to the first embodiment except for the step 5 and step 6, wherein if the Secondary Node determines that the requirement of the QoS flow can't be satisfied in accordance with QoS parameter of flow and DRB-flow mapping relation, the Secondary Node transmits a Secondary Node modification request message, carrying the RB ID and/or suggested QoS parameter, to the Master RAN.

The subsequent operations of the Master Node are as follows.

Scheme 1: the Master Node determines whether to perform a bearer type change, e.g., change into a MCG bearer, in accordance with the QoS information transmitted by the Secondary Node, and the MeNB may initiate an Xn Secondary Node modification or release process to complete the bearer type change; or the Master Node may re-negotiate RB QoS with the Secondary Node, and the Master Node may initiate a Secondary Node modification process to complete the negotiation of the RB parameters.

Scheme 2: having received the QoS information transmitted by the Secondary Node, the Master Node, in accordance with its own resource status, directly initiates a PDU Session modification request, carrying the QFI of the QoS flow and/or suggested QoS parameter. to the core network.

The third embodiment: in the CU-DU scenario, the Secondary Node reports RB ID and/or recommended QoS parameter (also referred to as suggested QoS parameter), as shown in Fig. 10, which including the following steps.

Step 1: the Secondary Node determines that the QoS flow requirement can't be satisfied in accordance with QoS parameter of flow and DRB-flow mapping relation. Step 2: the Secondary Node transmits a UE context modification request message to the Master RAN, where the message carries RB ID and/or suggested QoS parameter. Step 3: optionally, the CU returns an acknowledge response.

Step 4: the CU initiates a modification request, carrying the QFI of the QoS flow and/or suggested QoS parameter, to the core network.

Based on the same inventive concept, embodiments of the present disclosure also provide a first device. Since the problem-solving principle of the first device is similar to the method of QoS processing as shown in Fig. 7 according to the embodiments of the present disclosure, the implementation of the first device may be learned by referring to the implementation of the method, thus a repeated description is omitted. Referring to Fig. 11, the structure of the first device according to an embodiment is illustrated. The first device 1100 includes: a first determination module 1101, configured to determine whether the first device satisfies a QoS requirement of one or more flows of a UE; and a first transmission module 1102, configured to, in the case that the first device can't satisfy the QoS requirement of the one or more flows of the UE, transmit a first message to a second device; where the first message includes one of or a combination of more than one of: QoS flow identifier (QFI), radio bearer (RB) ID, indication information indicating that the QoS requirement is not satisfied, or recommended QoS parameter.

In the embodiment, optionally, the first device is a secondary base station and the second device is a primary base station; or the first device is a DU and the second device is a CU.

In the embodiment, optionally, the first determination module 1101 is configured to: determine whether the first device satisfies the QoS requirement of the one or more flows of the UE in accordance with QoS parameter(s) of the one or more flows or in accordance with the QoS parameter(s) of the one or more flows and a mapping relation between data radio bearer (DRB) and flow.

In the embodiment, optionally, the first device 1100 further includes: a first reception module, configured to receive the QoS parameter(s) of the one or more flows transmitted by the second device and the mapping relation between DRB and flow on the second device.

In the embodiment, the QoS parameter includes a suggested guaranteed bit rate and/or a suggested maximum bit rate.

Based on the embodiments of the present disclosure, in a multi connectivity scenario or a CU-DU scenario, the first device can transmit the first message to the device when the first device can't satisfy the QoS requirement, where the first message includes one of or a combination of more than one of: QFI, RB ID, indication information indicating that the QoS requirement is not satisfied, or recommended QoS parameter. In this way, when the first device can't satisfy the QoS requirement in the multi connectivity scenario or the CU-DU scenario in the 5G system, the first device may act accordingly to satisfy the QoS requirement.

Based on the same inventive concept, embodiments of the present disclosure further provide a second device. Since the problem-solving principle of the second device is similar to the method of QoS processing as shown in Fig. 8 according to the embodiments of the present disclosure, the implementation of the second device may be learned by referring to the implementation of the method, thus a repeated description is omitted.

Referring to Fig. 12, the structure of the second device according to an embodiment is illustrated. The second device 1200 includes: a second reception module 1201, configured to receive a first message transmitted by a first device, where the first message is generated in the case that the first device can't satisfy QoS requirement of one or more flows of a UE; where the first message includes one of or a combination of more than one of: QoS flow identifier (QFI), radio bearer (RB) ID, indication information indicating that the QoS requirement is not satisfied, or recommended QoS parameter.

In the embodiment, optionally, the first device is a secondary base station and the second device is a primary base station; or the first device is a DU and the second device is a CU.

In the embodiment, optionally, the second device 1200 further includes: a second determination module, configured to determine whether a bearer type change is needed in accordance with the first message; or a second transmission module, configured to transmit a second message to a core network in accordance with the first message.

In the embodiment, optionally, the second message includes one of or a combination of more than one of: the QFI, the indication information indicating that the QoS requirement is not satisfied, or a suggested QoS parameter.

In the embodiment, the QoS parameter includes a suggested guaranteed bit rate and/or a suggested maximum bit rate.

Based on the embodiments of the present disclosure, in a multi connectivity scenario or a CU-DU scenario, the first device can transmit the first message to the second device when the first device can't satisfy the QoS requirement, where the first message includes one of or a combination of more than one of: QFI, RB ID, indication information indicating that the QoS requirement is not satisfied, or recommended QoS parameter. In this way, when the first device can't satisfy the QoS requirement in the multi connectivity scenario or the CU-DU scenario in the 5G system, the first device may act accordingly to satisfy the QoS requirement.

A network device is further provided in an embodiment, which including a memory, a processor and a computer program stored on the memory and executable by the processor, where the processor is configured to execute the computer program to implement steps of the methods of QoS processing described above.

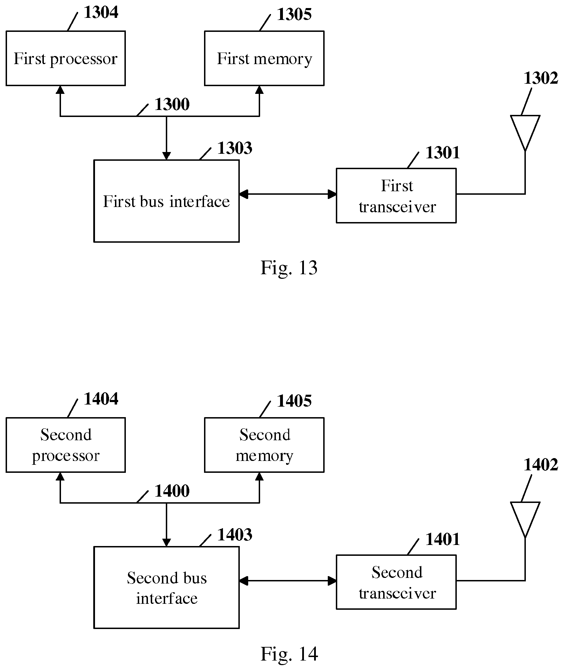

Referring to Fig. 13, embodiments of the present disclosure provide a first device, including: a first processor 1304, configured to read program in a first memory 1305 and implement the following process: determining whether the first device satisfies a QoS requirement of one or more flows of a UE; and in the case that the first device can't satisfy the QoS requirement of the one or more flows of the UE, transmitting a first message to a second device; where the first message includes one of or a combination of more than one of: QoS flow identifier (QFI), radio bearer (RB) ID, indication information indicating that the QoS requirement is not satisfied, or recommended QoS parameter; and a first transceiver 1301, configured to receive and transmit data under the control of the first processor 1304.

In Fig. 13, a bus architecture (represented by a first bus 1300) may include an arbitrary quantity of buses and bridges connected to each other. Various circuits including one or more processors represented by the first processor 1304 and a memory represented by the first memory 1305 are coupled via the first bus 1300. The first bus 1300 may further couple other circuits together, such as a periphery component, a voltage stabilizer and a power management circuit, which is well known in the art and is not repeated herein. A first bus interface 1303 provides an interface between the first bus 1300 and the first transceiver 1301. The first transceiver 1301 may be one element, or may be multiple elements, such as multiple receivers and transmitters. The first transceiver 1301 provides a unit configured to communicate with other devices on a transmission medium. Data processed by the first processor 1304 is transmitted via the first transceiver 1301 and the first antenna 1302 on a radio medium. Furthermore, the first antenna 1302 receives data and transmits the data to the first processor 1304 via the first transceiver 1301.

The first processor 1304 is in charge of managing the first bus 1300 and common processes, and may further provide various functions, e.g., timing, periphery interfaces, voltage adjusting, power source management and other controlling functions. The first memory 1305 may be configured to store data to be used by the first processor 1304 when performing operations. In specific, the first processor 1304 may be CPU, application specific integrated circuit (ASIC), field-programmable gate array (FPGA) or complex programmable logic device (CPLD).

Referring to Fig. 14, embodiments of the present disclosure provide a second device, including: a second processor 1404, configured to read program in a second memory 1405 and implement the following process: receiving a first message transmitted by a first device, where the first message is generated in the case that the first device can't satisfy a QoS requirement of one or more flows of a UE; where the first message includes one of or a combination of more than one of: QoS flow identifier (QFI), radio bearer (RB) ID, indication information indicating that the QoS requirement is not satisfied, or recommended QoS parameter; and a second transceiver 1401, configured to receive and transmit data under the control of the second processor 1404.

In Fig. 14, a bus architecture (represented by a second bus 1400) may include an arbitrary quantity of buses and bridges connected to each other. Various circuits including one or more processors represented by the second processor 1404 and a memory represented by the second memory 1405 are coupled via the first bus 1400. The second bus 1400 may further couple various other circuits together, such as a periphery component, a voltage stabilizer and a power management circuit, which is well known in the art and is not repeated herein. A second bus interface 1403 provides an interface between the second bus 1400 and the second transceiver 1401. The second transceiver 1401 may be one element, or may be multiple elements, such as multiple receivers and transmitters. The second transceiver 1401 provides a unit configured to communicate with other devices on a transmission medium. Data processed by the second processor 1404 is transmitted via the second transceiver 1401 and the second antenna 1402 on a radio medium. Furthermore, the second antenna 1402 receives data and transmits the data to the second processor 1404 via the second transceiver 1401.

The second processor 1404 is in charge of managing the second bus 1400 and common processes, and may further provide various functions, e.g., timing, periphery interfaces, voltage adjusting, power source management and other controlling functions. The second memory 1405 may be configured to store data to be used by the second processor 1404 performing operations.. In specific, the second processor 1404 may be CPU, application specific integrated circuit (ASIC), field-programmable gate array (FPGA) or complex programmable logic device (CPLD).

A computer readable storage medium storing therein a computer program (instructions) is also provided in an embodiment, and steps of the methods of QoS processing described above are performed when the computer program (instructions) is executed by a processor.

It should be understood that "one embodiment" or "an embodiment" mentioned throughout the specification means that specific features, structures or characteristics associated with the embodiment are included in at least one embodiment of the present disclosure. Hence, terms of "according to one embodiment" or "according to an embodiment" in the specification are not limited to the same embodiment. In addition, those specific features, structures or characteristics can be combined in one or more embodiments in any appropriate manner.

It should be understood, numerical references for respective processes in the embodiments of the present disclosure do not indicate any execution sequence, and these numerical references are not to limit implementation processes of the embodiments of the present disclosure. Execution sequences of the processes are determined based on functions and internal logics of the processes.

In addition, terms of "system" and "network" in the specification may be interchanged.

It should be understood that, the term "and/or" merely describes a relationship between associated objects. Such term may indicate three situations. For example, A and/or B may indicate: mere A, both A and B, or mere B. Furthermore, the symbol "/" usually indicates an "or" relationship between associated objects prior to and after such symbol.

It should be understood that in the embodiments of the present disclosure, "B corresponding to A" indicates that B is associated with A and may be determined based on A. However, it should also be understood that determining B based on A does not mean determining B based on only A, and B may be determined based on A and/or other information.

It should be understood that the method and device provided in the embodiments of the present disclosure may be implemented in other ways. For example, the described embodiments directed to the device are merely exemplary. For example, the units are divided merely in logical function, which may be divided in another way in actual implementation, e.g., multiple units or components may be combined or integrated into another system, or some features may be ignored or not performed. In addition, the disclosed or discussed mutual coupling or direct coupling or communication connection may be an indirect coupling or communication connection through some interfaces, devices or units, which may be implemented in electronic, mechanical or other forms.

Furthermore, functional units in the embodiments of the present disclosure may be integrated into one processing unit, or may be physically independent, or two or more units are integrated into one unit. The integrated units may be implemented by hardware or by combination of hardware and software.

Integrated units implemented as software functional units may be stored on a computer readable storage medium. The software functional units are stored on a storage medium and include several instructions for enabling a computer device (which may be a personal computer, a server, a network apparatus or the like) to execute partial steps of methods according to embodiments of the present disclosure. The storage medium may include medium that can store program code, such as a USB flash disk, a mobile Hard Disk, a Read-Only Memory (ROM), a Random Access Memory (RAM), a magnetic disk or an an optical disk.

## Claims

1. A method of quality of service, QoS, processing, comprising:
determining (701), by a first device, whether the first device satisfies a QoS requirement of one or more flows of a user equipment, UE; and
transmitting (702), by the first device, a first message to a second device, in the case that the first device does not satisfy the QoS requirement of the one or more flows of the UE;
**characterized in that**:
the first message comprises recommended QoS parameter; or, the first message comprises a combination of recommended QoS parameter and one or more of: QoS flow identifier, QFI, radio bearer ID, or indication information indicating that the QoS requirement is not satisfied;
the recommended QoS parameter comprises a suggested guaranteed bit rate and/or a suggested maximum bit rate.

2. The method according to claim 1, wherein determining (701), by the first device, whether the first device satisfies the QoS requirement of the one or more flows of the UE comprises:
determining, by the first device, whether the first device satisfies the QoS requirement of the one or more flows of the UE, in accordance with one or more QoS parameters of the one or more flows or in accordance with the one or more QoS parameters of the one or more flows and a mapping relation between data radio bearer, DRB, and flow.

3. The method according to claim 2, further comprising:
receiving, by the first device, the one or more QoS parameters of the one or more flows transmitted by the second device and the mapping relation between DRB and flow on the second device.

4. The method according to any one of claims 1 to 3, wherein the first device is a secondary base station and the second device is a primary base station, or, the first device is a distributed unit, DU, and the second device is a central unit, CU.

5. A first device (1100), comprising:
a first determination module (1101), configured to determine whether the first device (1100) satisfies a QoS requirement of one or more flows of a user equipment, UE; and
a first transmission module (1102), configured to transmit, in the case that the first device (1100) does not satisfy the QoS requirement of the one or more flows of the UE, a first message to a second device;
**characterized in that**:
the first message comprises recommended QoS parameter; or, the first message comprises a combination of recommended QoS parameter and one or more of: QoS flow identifier, QFI, radio bearer ID, or indication information indicating that the QoS requirement is not satisfied;
the recommended QoS parameter comprises a suggested guaranteed bit rate and/or a suggested maximum bit rate.

6. The first device (1100) according to claim 5, wherein the first determination module (1101) is configured to: determine whether the first device (1100) satisfies the QoS requirement of the one or more flows of the UE, in accordance with one or more QoS parameters of the one or more flows or in accordance with the one or more QoS parameters of the one or more flows and a mapping relation between data radio bearer, DRB, and flow; and
wherein the first device (1100) further comprises: a first reception module, configured to receive the one or more QoS parameters of the one or more flows transmitted by the second device and the mapping relation between DRB and flow on the second device.

7. The first device (1100) according to any one of claims 5 to 6, wherein the first device (1100) is a secondary base station, or, the first device (1100) is a distributed unit, DU.

8. A computer readable storage medium, having a computer program stored thereon, **characterized in that**, steps of the method of QoS processing according to any one of claims 1 to 4 are implemented when the computer program is executed by a processor.

## Patentansprüche

1. Verfahren zur Verarbeitung von Dienstgüte, QoS, umfassend:
Bestimmen (701), durch eine erste Vorrichtung, ob die erste Vorrichtung eine QoS-Anforderung von einem oder mehreren Flüssen eines Benutzergeräts, UE, erfüllt; und
Übertragen (702), durch die erste Vorrichtung, einer ersten Nachricht an eine zweite Vorrichtung, wenn die erste Vorrichtung die QoS-Anforderung des einen oder der mehreren Flüsse des UE nicht erfüllt;
**dadurch gekennzeichnet, dass**:
die erste Nachricht einen empfohlenen QoS-Parameter umfasst; oder die erste Nachricht eine Kombination aus einem empfohlenen QoS-Parameter und einem oder mehreren von Folgendem umfasst: QoS-Stromkennung, QFI, Funkträger-ID oder Anzeigeinformationen, die anzeigen, dass die QoS-Anforderung nicht erfüllt ist;
wobei der empfohlene QoS-Parameter eine vorgeschlagene garantierte Bitrate und/oder eine vorgeschlagene maximale Bitrate umfasst.

2. Verfahren nach Anspruch 1, wobei Bestimmen (701), durch die erste Vorrichtung, ob die erste Vorrichtung die QoS-Anforderung des einen oder der mehreren Flüsse des UE erfüllt, Folgendes umfasst:
Bestimmen, durch die erste Vorrichtung, ob die erste Vorrichtung die QoS-Anforderung des einen oder der mehreren Flüsse des UE erfüllt gemäß einem oder mehreren QoS-Parametern des einen oder der mehreren Flüsse oder gemäß dem einen oder den mehreren QoS-Parametern des einen oder der mehreren Flüsse und einer Zuordnungsbeziehung zwischen Datenfunkträger, DRB, und Fluss.

3. Verfahren nach Anspruch 2, weiter umfassend:
Empfangen, durch die erste Vorrichtung, des einen oder der mehreren QoS-Parameter des einen oder der mehreren Flüsse, die von der zweiten Vorrichtung übertragen wurden, und der Zuordnungsbeziehung zwischen DRB und Fluss an der zweiten Vorrichtung.

4. Verfahren nach einem der Ansprüche 1 bis 3, wobei die erste Vorrichtung eine sekundäre Basisstation ist und die zweite Vorrichtung eine primäre Basisstation ist, oder die erste Vorrichtung eine verteilte Einheit, DU, ist und die zweite Vorrichtung eine zentrale Einheit, CU, ist.

5. Erste Vorrichtung (1100), umfassend:
ein erstes Bestimmungsmodul (1101), das ausgelegt ist, um zu bestimmen, ob die erste Vorrichtung (1100) eine QoS-Anforderung von einem oder mehreren Flüssen eines Benutzergeräts, UE, erfüllt; und
ein erstes Übertragungsmodul (1102), das ausgelegt ist, um, wenn die erste Vorrichtung (1100) die QoS-Anforderung des einen oder der mehreren Flüsse des UE nicht erfüllt, eine erste Nachricht an eine zweite Vorrichtung zu übertragen;
**dadurch gekennzeichnet, dass**:
die erste Nachricht einen empfohlenen QoS-Parameter umfasst; oder die erste Nachricht eine Kombination aus einem empfohlenen QoS-Parameter und einem oder mehreren von Folgendem umfasst: QoS-Stromkennung, QFI, Funkträger-ID oder Anzeigeinformationen, die anzeigen, dass die QoS-Anforderung nicht erfüllt ist;
wobei der empfohlene QoS-Parameter eine vorgeschlagene garantierte Bitrate und/oder eine vorgeschlagene maximale Bitrate umfasst.

6. Erste Vorrichtung (1100) nach Anspruch 5, wobei das erste Bestimmungsmodul (1101) ausgelegt ist, um: zu bestimmen, ob die erste Vorrichtung (1100) die QoS-Anforderung des einen oder der mehreren Flüsse des UE erfüllt gemäß einem oder mehreren QoS-Parametern des einen oder der mehreren Flüsse oder gemäß dem einen oder den mehreren QoS-Parametern des einen oder der mehreren Flüsse und einer Zuordnungsbeziehung zwischen Datenfunkträger, DRB, und Fluss; und
wobei die erste Vorrichtung (1100) weiter Folgendes umfasst: ein erstes Empfangsmodul, das ausgelegt ist, um den einen oder die mehreren QoS-Parameter des einen oder der mehreren Flüsse, die von der zweiten Vorrichtung übertragen wurden, und die Zuordnungsbeziehung zwischen DRB und Fluss an der zweiten Vorrichtung zu empfangen.

7. Erste Vorrichtung (1100) nach einem der Ansprüche 5 bis 6, wobei die erste Vorrichtung (1100) eine sekundäre Basisstation ist, oder die erste Vorrichtung (1100) eine verteilte Einheit, DU, ist.

8. Computerlesbares Speichermedium, auf dem ein Computerprogramm gespeichert ist, **dadurch gekennzeichnet, dass** Schritte des Verfahrens zur QoS-Verarbeitung nach einem der Ansprüche 1 bis 4 implementiert werden, wenn das Computerprogramm durch einen Prozessor ausgeführt wird.

## Revendications

1. Procédé de traitement de la qualité de service, QoS, comprenant :
la détermination (701), par un premier dispositif, si le premier dispositif respecte une exigence de QoS d'un ou plusieurs flux d'un équipement utilisateur, UE ; et
la transmission (702), par le premier dispositif, d'un premier message à un second dispositif, dans le cas où le premier dispositif ne respecte pas l'exigence de QoS des un ou plusieurs flux de l'UE ;
**caractérisé en ce que** :
le premier message comprend un paramètre de QoS recommandé ; ou le premier message comprend une combinaison d'un paramètre de QoS recommandé et d'un ou plusieurs parmi : un identifiant de flux QoS, QFI, un ID de porteuse radio ou des informations d'identification indiquant que l'exigence de QoS n'est pas respectée ;
le paramètre de QoS recommandé comprend un débit binaire garanti suggéré et/ou un débit binaire maximum suggéré.

2. Procédé selon la revendication 1, dans lequel la détermination (701), par le premier dispositif, si le premier dispositif respecte l'exigence de QoS des un ou plusieurs flux de l'UE comprend :
la détermination, par le premier dispositif, si le premier dispositif respecte l'exigence de QoS des un ou plusieurs flux de l'UE, conformément à un ou plusieurs paramètres de QoS des un ou plusieurs flux ou conformément aux un ou plusieurs paramètres de QoS des un ou plusieurs flux et à une relation de mappage entre une porteuse radio de données, DRB, et un flux.

3. Procédé selon la revendication 2, comprenant en outre :
la réception, par le premier dispositif, des un ou plusieurs paramètres de QoS des un ou plusieurs flux transmis par le second dispositif et la relation de mappage entre une DRB et un flux sur le second dispositif.

4. Procédé selon l'une quelconque des revendications 1 à 3, dans lequel le premier dispositif est une station de base secondaire et le second dispositif est une station de base principale ou le premier dispositif est une unité distribuée, DU, et le second dispositif est une unité centrale, CU.

5. Premier dispositif (1100), comprenant :
un premier module de détermination (1101), configuré pour déterminer si le premier dispositif (1100) respecte une exigence de QoS d'un ou plusieurs flux d'un équipement utilisateur, UE ; et
un premier module de transmission (1102), configuré pour transmettre, dans le cas où le premier dispositif (1100) ne respecte pas l'exigence de QoS des un ou plusieurs flux de l'UE, un premier message à un second dispositif ;
**caractérisé en ce que** :
le premier message comprend un paramètre de QoS recommandé ; ou le premier message comprend une combinaison d'un paramètre de QoS recommandé et d'un ou plusieurs parmi : un identifiant de flux QoS, QFI, un ID de porteuse radio ou des informations d'identification indiquant que l'exigence de QoS n'est pas respectée ;
le paramètre de QoS recommandé comprend un débit binaire garanti suggéré et/ou un débit binaire maximum suggéré.

6. Premier dispositif (1100) selon la revendication 5, dans lequel le premier module de détermination (1101) est configuré pour : déterminer si le premier dispositif (1100) remplit l'exigence de QoS des un ou plusieurs flux de l'UE, conformément à un ou plusieurs paramètres de QoS des un ou plusieurs flux ou conformément aux un ou plusieurs paramètres de QoS des un ou plusieurs flux et à une relation de mappage entre une porteuse radio de données, DRB, et un flux ; et
dans lequel le premier dispositif (1100) comprend en outre : un premier module de réception, configuré pour recevoir les un ou plusieurs paramètres de QoS des un ou plusieurs flux transmis par le second dispositif et la relation de mappage entre une DRB et un flux du second dispositif.

7. Premier dispositif (1100) selon l'une quelconque des revendications 5 et 6, dans lequel le premier dispositif (1100) est une station de base secondaire ou le premier dispositif (1100) est une unité distribuée, DU.

8. Support de stockage lisible par ordinateur sur lequel est stocké un programme informatique, **caractérisé en ce que** des étapes du procédé de traitement de QoS selon l'une quelconque des revendications 1 à 4 sont mises en œuvre lorsque le programme informatique est exécuté par un processeur.
